Europäisches Patentamt

(19) European Patent Office

Office européen des brevets

(11) Publication number: **0 059 844**
**A2**

## (12) EUROPEAN PATENT APPLICATION

(21) Application number: **82100886.9**

(22) Date of filing: **08.02.82**

(51) Int. Cl.³: **B 65 B 5/04**
**B 65 B 53/06**
**//B65B13/12**

(30) Priority: **09.02.81 IT 1959081**

(43) Date of publication of application:
**15.09.82 Bulletin 82/37**

(84) Designated Contracting States:
**AT BE CH DE FR GB LI LU NL SE**

(71) Applicant: **Terzaghi, Giovanni**
**Via Pirelli 30**
**Milano(IT)**

(72) Inventor: **Terzaghi, Giovanni**
**Via Pirelli 30**
**Milano(IT)**

(74) Representative: **Beyer, Werner, Dipl.-Ing. et al,**
**Staufenstrasse 36, II P.O. Box 174109**
**D-6000 Frankfurt/Main(DE)**

(54) A process and means for the continuous and automatic enveloping of electric battery plates.

(57) A continuous, automatic process for enveloping electric battery plates free from environmental risks is proposed. The process is carried out by a device comprising:

- a supply device 'B' for feeding a longitudinally heat-shrinkable strip (2) consisting of a series of adjacent and parallel envelopes open at least on one sind;
- a device 'M' for supplying plates (3) to be enveloped;
- an enveloping device (6) comprising a means for

enlarging the opening of each envelope and a means (5) for inserting the plate (3) into the envelope;
- a heating process 'E';
- a device 'F' for hot-cutting the continuous strip; and
- a point 'G' for storing the enveloped plates (6'').

A series of guide rollers (7), (7') and (7'') is provided for feeding the continuous strip through the various processes.

Fig. 1

EP 0 059 844 A2

"A PROCESS AND MEANS FOR THE CONTINUOUS AND AUTOMATIC
ENVELOPING OF ELECTRIC BATTERY PLATES"

This invention relates to a process and means for
effecting the continuous and automatic enveloping of
electric battery plates.

Specifically, this invention relates to a process and
means for the continuous and automatic enveloping of
electric battery plates within envelopes made of a
fabric containing heat-shrinkable fibres.

It is well known that the life of electric lead-acid
batteries is reduced by the shedding of active material
from the plates and by corrosion, especially on the
positive plate. In the case of pasted plates it is
common practice to assist the retention of active material
on the grid by inserting between plates of opposite
polarity materials capable of retaining the active
material, such as glass mat, felts, synthetic separators and/or sepacers etc...

These materials, in general, are however unable to
contain the considerable pressure resulting from volume
variations of the active material during charging and
discharging cycles. This results in swelling of the
plates, breaking of the peripheral frames, shedding of
the active material and the subsequent possibility of
short-circuits occurring between plates of opposite
polarity.

The use of microporous envelopes containing the plates
facilitates the elimination of some of the above-mentioned draw-backs, however, the means employed for laterally sewing or joining the envelopes result in local weakening, so that their strength is limited.

In addition, commonly employed methods for example, glass mat and/or felts, introduce a considerable inert mass thereby displacing electrolyte. Further electrolyte displacement occurs due to entrapment of gases within the interstices of such mats and/or felts.

It has been proposed, for eliminating the said disadvantages, to envelope the plates with a material containing synthetic fibres and, by heat-shrinking the material around the plate, to constrain the active material in that plane. Heat shrinkage of the envelope, supplemented by the ribs and/or folds of any additional microporous or perforated separator material, exercises a constraining influence in a direction perpendicular to the plane of the plate. These envelopes permit the elimination or reduction in thickness of conventional supporting materials, for example, glass mats.

The shrinkable envelopes can be continuously fabricated from a strip comprising two layers of multitubular fabric containing a heat-shrinkable yarn, for example, a high strength polyester in the direction of the strip, with a laterally opposed non heat-shrinkable or pre-shrunk yarn, and joined at regular intervals so as to form envelopes already closed at two or three sides. The lateral joinings between each envelope can be obtained either with one or more weft beats or by transposing the upper and lower warp yarns at their point of juncture. The envelopes containing the plates are then subjected to a heat treatment process resulting in shrinkage of the heat sensitive yarns thus tightly encapsulating the plate.

All the enveloping operations such as feeding to the heat-shrinking process, cutting of the enveloped product and storage are generally made by hand with a consequential increase in costs and environmental risks.

This invention aims at providing a process and means for carrying out the abovementioned operations in a continuous and automatic manner without manual intervention, thus reducing both costs and environmental risks.

This and other objects are attained, according to this invention, by a process consisting of:

- Feeding to an enveloping station a continuous fabric strip containing a heat-shrinkable yarn in the longitudinal direction and being formed of a series of flat, equal, adjacent and parallel envelopes open at least at one side;

- Feeding to the same station the plates to be enveloped;

- Enlarging by suction the open edge of each envelope;

- Inserting a plate into the so enlarged opening;

- Feeding the continuous strip containing the enveloped plates to a heat-shrinking device;

- Heat-shrinking the envelopes with heat treatment until the envelopes are firmly bonded to the lateral ribs of each plate;

- Separating adjacent, enveloped single plates by heat-cutting; and

- Transferring the single enveloped plates to the storage point.

The means of effecting the above-mentioned process, also part of this invention, comprises:

- A device for continuously feeding the strip, which incorporates a heat-shrinkable fabric shrinking in direction of the length, the strip being formed of a series of flat, adjacent, parallel envelopes open at least at one side;

- An enveloping device comprising a means of enlarging the opening of each envelope and a means of inserting the plate into the said opening;

- A feed device, preferably perpendicular to the continuous strip feed, for delivering the plates to be enveloped to the enveloping device;

- A heating process containing a heating apparatus, with the continuous strip containing the enveloped plates passing through this process;

- A process for hot-cutting the strip between each envelope to separate adjacent enveloped single plates;

- A storage point for enveloped plates;

- A means for continuously passing the strip from the feeding device through the enveloping, heating and cutting operations; and

- A means for transferring the single enveloped plates from the cutting process to the storage point.

The feed device for the plates to be enveloped can be preceded by a plate parting process. In this case, the plates are arranged in adjacent rows, and the means for feeding the plates to enveloping process can consist of two conveyor belts feeding each plate row to a different enveloping point. The plates before being enveloped, may be convered with a retaining mat or tissue, the edges being bound with a stiff resin tape. For effecting this covering and edge binding, the device described herein envisaged the interposing of felt and/or resin tape dispensers before the enveloping process.

This invention will be better understood in terms of a preferred embodiment by reference to the accompanying drawings in which;

- Figure 1 shows a schematic perspective view of the device according to this invention;

- Figure 2 is a schematic side view of the device shown in Fig. 1;

- Figure 3 is a schematic plan view of the device shown in Figs. 1 and 2;

- Figure 4 is a schematic view of a means for feeding double plates, for example the processing of automotive battery plates;

- Figure 5 is a schematic plan view of a means for feeding single, rather large sized plates, for example those used in industrial batteries;

- Figure 6 shows schematically a means of incorporating into the process an automatic protective felt wrapping device, located before the device for inserting the plates into the envelopes; and

- Figure 7 shows schematically a means of incorporating into the process an automatic device for binding the edges of the plate and bottoms again located before the enveloping process.

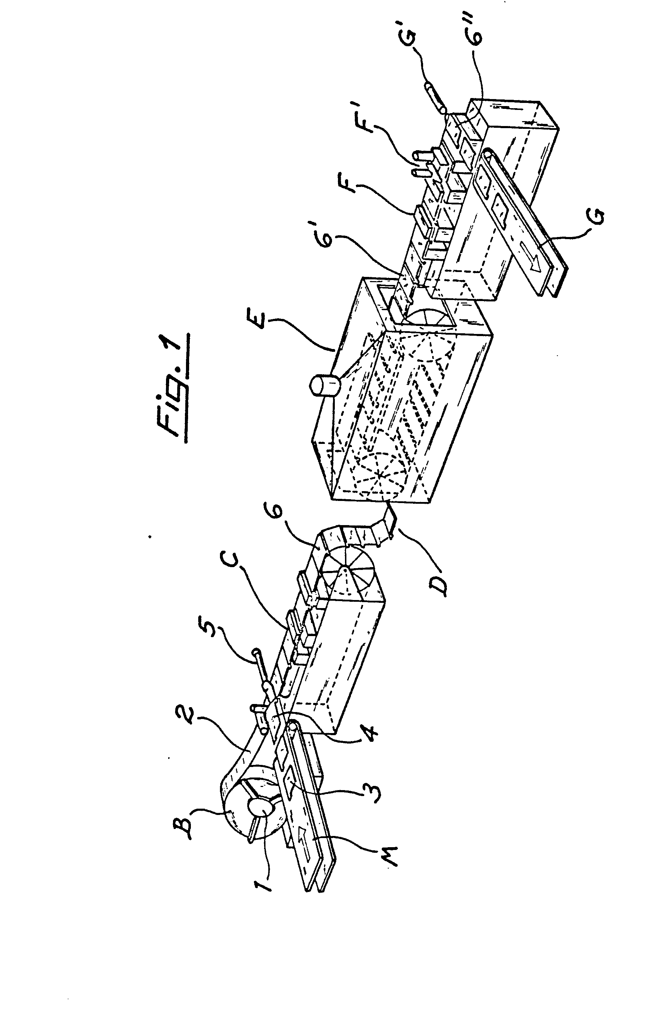

- Figures 1, 2 and 3 show the coordinated sequence of the various processes incorporated in this device as effected with machines built according to the present art.

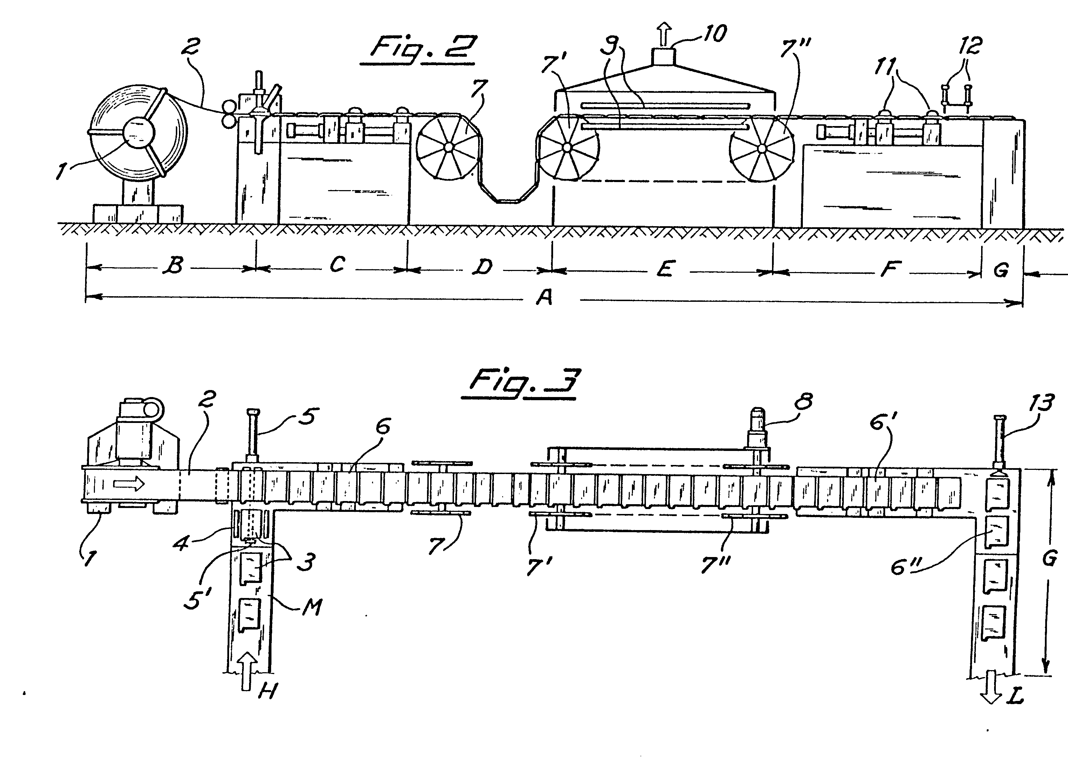

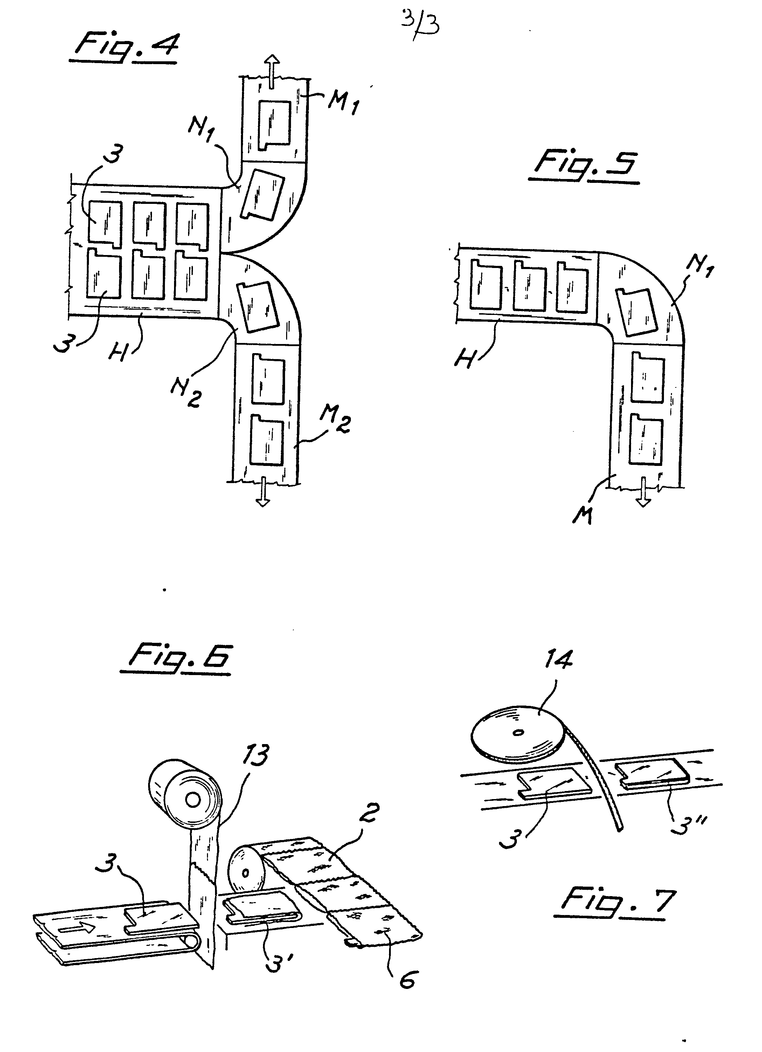

In Figs. 1 and 2, 'A' indicates the device described in this invention comprising the various processes permitting the feeding of plates, be they covered, or not, with cellulose or synthetic fibre or glass fibre felts and which are to be treated according to this process, and to deliver them as separate and enveloped plates to a finished product store (not shown).

The transporting means may consist of any established system, for example belt, roller or ball conveyors.

The plate feed 'M' is located between the plate storage point and the enveloping process and comprises a conveyor belt transporting the plates (3) with the plate lug pointing away from the inlet and the plate sides parallel to the feed axis. All the other processes are perpendicularly aligned to the plate feed 'M', commencing with a device 'B' for aligning and feeding the continuous strip (2) containing the unshrunk envelopes (with or without the resin tape) which is wound on a freely rotating dispensing roller.

The strip (2) is fed to the enveloping process 'C', at which the plates are inserted into the envelopes. A drive wheel (7) pulls the strip (2) containing the plates from the enveloping process 'C' to form a storage 'loop' at point 'D'. A second guide roller (7) feeds the strip (2) to a heat-shrinking and conditioning station 'E'.

A third guide roller (7"), driven by an adjustable speed electric motor (8), picks up the strip '2' leaving station 'E'. Between the rollers (7') and (7") the strip runs through an enclosed oven between two heating devices (9).

After leaving station 'E' the strip (2) continues to the aligning and cutting station 'F', in which positioning devices (11) progressively align the plates before
reaching a pair of hot blades (12). The hot blades (12)
may be of any type, for example a conventional reciprocating guillotine, with rotating blade cutter or a
sliding laser. The blades (12) are heated to facilitate
both cutting and simultaneous heat welding of the
fabric yarns.

The single plates (6") encapsulated within the
envelopes then arrive at the delivery point (6), where
a synchronised piston (13) pushes each plate onto a
conveyor belt carrying the plates (6") to a storage
point prior to the group burning process or to the
automatic group loader.

For correct insertion into the envelopes on strip (2)
in the enveloping process (6), plates must be accurately
aligned and delivery synchronised with the envelope feed.

This is ensured by two mechanisms. One is a linear
alignment device (4) under which runs a variable speed
intermittently driven plate feed device (5') synchronised with the feed of strip (2). When the plate feed
device (5') reaches the end of a cycle and a plate (3)
is located within the alignment device (4), an envelope
is prepositioned in relation to the feed device (5')
with the open edge of the envelope being further
enlarged by suction. Simultaneously a pneumatic piston
(5) at the other side of the strip (2) and symmetric to
the feeder (5') inserts the plate (3) into the stationary
opened envelope and pushes it into a preset position.

At the next stage, the strip (2) containing now the
loosely enveloped plate (6), moves forward to the storage
point, while the plate loader (5') returns to its
original position at the inlet end of the guides (4). The
strip (2) of enveloped plates (6) passes through a
storage point consisting of a 'loop' formed between rollers (7) and (7'). This 'loop' permits the coupling of the two stations 'C' and 'E' and accommodates the linear reduction of the strip resulting from the heat-shrinking process. The temperature of the heating device (9) can be adjusted to compensate for differing types of envelope yarn and for example resin based treatments polymerized during shrinkage.

A flue (10) removes the hot air and other products generated in the oven by this treatment, thus preventing environmental pollution. A first variation of the process described in this invention is schematically illustrated in Fig. 4.

According to this variation the plates (3) fed to the station 'M' can be supplied directly after plate parting in the case of double pasted plates, or after forming from expanded metal partially or wholly aged whether or not protected by cellulose or synthetic resin felts.

In general such plates leave the relevant previous process still joined together in pairs and are delivered at a high transfer speed.

To avoid intermediate storage and reorientation of the separated plates prior to the feed station 'M', the flow is divided into two halves, conveyed along separate lines 'N' and 'N$_2$' at 90$^o$ to one another, and fed into two different enveloping lines, on feed belts 'M' and 'M$_2$'. Fig. 5 shows schematically a further variation of this invention.

It ist known that industrial plates may need a protective layer of glass or synthetic fibres, when a high filtering capacity is desired without excessively increasing the thickness of the containing fabric. It is preferable, under such conditions, to apply the protective layer together with the paste or immediately thereafter to ensure paste retention and surface setting. The plate supplied by belt 'H' thus already have felt applied, although being substantially damp. These plates can be fed directly, or by shunt 'N$_1$', to the conveyor belt 'M', despite their damp condition.

The process and means are the same as those described heretofore, it being possible to adjust the temperature of station 'E' to ensure shrinking by rapid surface heating which does not modify the active material. In this case, station 'G' can be followed by a secondary curing or drying stage to ensure plates are of the required moisture content necessary for stability of the plates during their working life. This method results in well cured, compact and dustless plates.

Fig. 6 shows a further embodiment of the process and means of this invention. This embodiment occurs when, for different technological reasons the plate is not provided with the supporting felt inserted during or after pasting. According to this embodiment, the station 'M' is equipped with a felt dispenser and applicator (13). The plates (3) are pushed against the felt (13) which is folded and wrapped around the plate as shown in (3') before being inserted into the envelope.

Fig. 7 shows still another embodiment of this process which can be used when it is necessary, to insulate the edges and bottom of the plates formed from expanded metal strip. In this case device 'M' is equipped with a horizontal distributor (14) for a preformed stiff resin tape. Each plate (3) carried by the conveyor belt at (12), contacts this resin tape which adhers to the bottom and edges of plate (3) before the plate enters the envelope; in this way the

**0059844**

base and outer edges of the plate (3") are insulated, thus enclosing the active material. The pockets or envelopes of strip (2) may be prefabricated or made in situ. In the latter case the strip (2) can be replaced by a double strip, again made of a yarn shrinkable in the longitudinal direction and non-shrinkable in the direction perpendicular thereto. The process is analogous to that described hereinabove but with the interposing of a joining, welding or sewing phase in station 'C', i.e., after the positioning of the plates between the two layers of the strip. Variations, modifications and changes may be made to the above-described process and means and in the practical embodiment of this process without departing from the spirit thereof and its protective scope.

CLAIMS:

1. A process for the continuous and automatic enveloping of electric battery plates consisting of:

   - feeding to an enveloping device a continuous strip made of a fabric comprising, in longitudinal direction, a heat-shrinkable yarn and being made up of a series of flat, equal, adjacent and parallel envelopes open, at least, on one side;

   - feeding to the same device the plates to be enveloped;

   - enlarging the two lips of the open side of each envelope;

   - inserting a plate into each so-enlarged opening;

   - transporting the continuous strip containing the enveloped plates to a heat-shrinking apparatus;

   - heat-shrinking the envelopes by heat-treatment until the envelopes are fully bonded to the side frames of the plates;

   - hot-cutting the single envelopes each containing a plate; and

- transfering the single enveloped plates to the finished product storage point.

2. A device for the embodiment of the process according to claim 1, comprising:

- a device for feeding the continuous strip of heat-shrinkable fabric shrinking in the longitudinal direction and comprising a series of flat, adjacent, parallel envelopes open at least on one side;

- an enveloping device comprising a means for opening the mouth of each envelope and a means for inserting the plate into the envelope through this opening;

- a feeding device, preferably perpendicular to the continuous band feed, for feeding the plates to be enveloped to the above enveloping device;

- a tunnel-like heating process comprising two heating devices separate and parallel to one another, through which passes the continuous strip of enveloped plates;

- a hot cutting device for cutting the band at each envelope;

- a finished product storage point;

- a means for continuously passing the strip from the feeding device through the enveloping, heating and cutting processes; and

- a means for transferring the single enveloped plates from the cutting process to the storage point.

3. A device according to claim 2, in which the plates are arranged in the feeding station with the plate lug pointing away from the inlet and with the plate sides parallel to the feed axis.

4. A device according to claim 2, in which the continuous band is drawn through the enveloping station by a drive roller.

5. A device according to claim 4, in which a second guide roller feeds the strip to the shrinking process and in which provision is made between the entraining and guide roller for a loop-shaped storage and balancing point with a third driven guide roller for conveying the strip leaving the shrinking process.

6. A device according to claim 2, in which the enveloping device comprises a guide, a system for opening by suction the upper and lower edges of the envelope and an adjustable stroke pneumatic piston arranged on the opposite side of the band driving a plate feed device for introducing the plates into the open envelopes.

7. A device according to claim 2, in which the hot-cutting station comprises two heated guillotine blades or a laser cutter.

8. A device according to claim 2, in which the plate feeding station is provided with a felt dispenser and applicator for wrapping plates with glass wool or synthetic felt.

9. A device according to claim 2, in which the plate feeding station is provided with a horizontal stiff resin tape dispenser for wrapping the edges and bottom of each plate.

10. A process according to claim 2, in which the envelopes are made in situ by feeding two bands one above the other and welding at a constant pitch before the plate enveloping process.

_Fig. 1_

0 0 5 9 8 4 4

_Fig.2_

_Fig.3_

0059844

3/3

Fig.4

Fig.5

Fig.6

Fig.7